# EUROPEAN PATENT APPLICATION

(11) **EP 4 769 197 A1**
(43) Date of publication of application: **01.07.2026**
(21) Application number: 24859393.1
(22) Date of filing: 07.08.2024
(51) Int. Cl.: G06F 21/64

(54) **SPECIMEN TESTING SYSTEM, INFORMATION PROCESSING METHOD, AND COMPUTER PROGRAM**

(30) Priority: 25.08.2023 JP 2023137388
(71) Applicant: HORIBA, Ltd., Minami-ku Kyoto-shi Kyoto 601-8510 (JP)
(72) Inventor: TABATA, Kunio, Kyoto-shi, Kyoto 601-8510 (JP); SHIMURA, Miyoko, Kyoto-shi, Kyoto 601-8510 (JP); YAMAMOTO, Mitsunobu, Kyoto-shi, Kyoto 601-8510 (JP)
(74) Representative: Müller Hoffmann & Partner
(86) International application number: PCT/JP2024/028237
(87) International publication number: WO 2025/047353

(57) **Abstract**

There are provided a test object testing system, an information processing method, and a computer program for preventing the alteration of data related to measurements.

A test object testing system includes: a measuring device; and an information processing device. The measuring device acquires a measurement result necessary for determining a condition of a test object in accordance with predetermined rules, generates measurement data indicating the measurement result, and stores, in association with each other, protected device data including device data, which indicates a result of an inspection regarding whether or not the condition of the measuring device complies with the predetermined rules, and a hash value of the device data and protected measurement data including the measurement data and a hash value of the measurement data.

## Description

### Technical Field

The present invention relates to a test object testing system, an information processing method, and a computer program for managing data related to measurements performed by a measuring device.

### Background Art

Vehicles are tested for their conditions, such as exhaust gas emission values. For example, in order for the sale of a new vehicle to be approved, it is necessary to obtain certification proving, through tests specified in predetermined rules, that the condition of the vehicle satisfies predetermined conditions specified in the predetermined rules, such as laws. In such tests, various measurement values such as the concentration of each component contained in exhaust gas are measured, and the condition of the vehicle is determined by determining whether or not the measurement results conform to the standards. Conventionally, due to reasons such as manually recording the measurement results, there is a possibility that the measurement results may be altered. For example, the measurement results may be confused with other results or the measurement results may be rewritten. If the measurement results are altered, the vehicle condition will be incorrectly determined based on the altered measurement results. If the vehicle condition is incorrectly determined, a problem arises that an inappropriate vehicle whose condition does not satisfy the conditions specified in the predetermined rules is mistakenly certified and the inappropriate vehicle ends up being sold. Therefore, a technique for preventing the alteration of measurement results is required. Patent Literature 1 discloses an example of a technique for storing information indicating the environment at the time of the test in such a manner that the information cannot be altered.

### Citation List

### Patent Literature:

Patent Literature 1: WO2021/200162

### Summary

### Technical Problems

In tests for vehicle certification, the condition of the measuring device, such as its settings or performance, should satisfy predetermined requirements specified in predetermined rules, and an inspection is performed to determine whether or not the requirements are met. If the results of this inspection are altered, a measuring device that does not satisfy the requirements may be used, resulting in inaccurate measurement results, and there is a risk that the vehicle condition will be incorrectly determined based on the inaccurate measurement results. To improve the reliability of the test, it is necessary to prevent the alteration of the measurement results and the inspection results regarding the condition of the measuring device.

The present invention has been made in view of such circumstances, and an object thereof is to provide a test object testing system, an information processing method, and a computer program for preventing the alteration of data related to measurements.

### Solution to Problems

A test object testing system according to one aspect of the present invention is characterized by comprising: a measuring device; and an information processing device, wherein the measuring device acquires a measurement result necessary for determining a condition of a test object in accordance with predetermined rules, generates measurement data indicating the measurement result, and stores, in association with each other, protected device data including device data, which indicates a result of an inspection regarding whether or not the condition of the measuring device complies with the predetermined rules, and including a hash value of the device data and protected measurement data including the measurement data and a hash value of the measurement data.

In one aspect of the present invention, the measuring device acquires a measurement result necessary for determining the condition of the test object, such as a vehicle. The information processing device stores the protected device data including the device data related to the condition of the measuring device and the hash value of the device data. In addition, the information processing device stores the protected measurement data, which includes the measurement data indicating the measurement result of the measuring device and the hash value of the measurement data, in association with the protected device data. The alteration of the device data indicating the inspection result of the condition of the measuring device and the measurement data indicating the measurement result is prevented.

In the test object testing system according to one aspect of the present invention, it is characterized in that the information processing device generates result data including a result of determining the condition of the test object using the protected device data and the protected measurement data, and stores the result data in a blockchain.

In one aspect of the present invention, the result data including the result of determining the condition of the test object is stored in a blockchain. By storing the result data in the blockchain, the alteration of the result data is prevented.

In the test object testing system according to one aspect of the present invention, it is characterized in that the information processing device determines whether or not the protected device data and the protected measurement data have been altered based on hash values included in the protected device data and the protected measurement data before determining the condition of the test object.

In one aspect of the present invention, whether or not the protected device data and the protected measurement data have been altered is determined based on the hash values included in the protected device data and the protected measurement data. If the protected device data has been altered, the hash value of the device data included in the second data will no longer match the hash value included in the second data, and accordingly, the alteration is detected. Similarly, if the protected measurement data is altered, the alteration is detected.

In the test object testing system according to one aspect of the present invention, it is characterized in that the information processing device stores the result data in the blockchain in association with the protected device data and the protected measurement data used to determine the condition of the test object.

In one aspect of the present invention, the result data is stored in the blockchain in association with the protected device data and the protected measurement data. Since the protected device data and the protected measurement data are associated with the result data, it is possible to refer to the protected device data, the protected measurement data, the device data, or the measurement data with respect to the determination results.

In the test object testing system according to one aspect of the present invention, it is characterized in that the information processing device determines whether or not the result data stored in the blockchain has been altered using a hash value stored in the blockchain.

In one aspect of the present invention, whether or not the result data has been altered is determined using the hash value stored in the blockchain. If the result data has been altered, the calculated hash value associated with the result data will no longer match the hash value stored in the blockchain. Therefore, it is possible to detect the alteration of result data.

In the test object testing system according to one aspect of the present invention, it is characterized in that the information processing device issues an NFT (Non-Fungible Token) associated with the result data.

In one aspect of the present invention, an NFT is issued for the result data. Since the NFT is issued, the owner of the result data is determined. The owner can check the result data including the determination result.

In the test object testing system according to one aspect of the present invention, it is characterized in that the device data indicates a result of an inspection regarding whether or not settings for measurement in the measuring device satisfy predetermined conditions and a result of an inspection regarding whether or not measurement performance of the measuring device satisfies predetermined standards.

In one aspect of the present invention, the device data indicates the result of an inspection regarding whether or not the settings and performance of the measuring device satisfy the conditions necessary for determining the condition of the test object. The device data proves that the settings and performance of the measuring device satisfy the requirements necessary for determining the condition of the test object.

A test object testing system according to one aspect of the present invention is characterized by comprising: a measuring device; and an information processing device, wherein the measuring device stores device data indicating a result of an inspection regarding whether or not the measuring device complies with predetermined rules, generates measurement data indicating the measurement result of the measuring device, and transmits the device data and the measurement data to the information processing device, and the information processing device receives the device data and the measurement data, generates protected device data including the device data and a hash value of the device data, generates protected measurement data including the measurement data and a hash value of the measurement data, and stores the protected device data and the protected measurement data in association with each other.

In one aspect of the present invention, the measuring device stores the device data, generates the measurement data, and transmits the device data and the measurement data to the information processing device. The information processing device generates the protected device data including the device data and the hash value of the device data, and generates the protected measurement data including the measurement data and the hash value of the measurement data. Therefore, the information processing device can store the protected device data and the protected measurement data in association with each other.

An information processing method according to one aspect of the present invention is characterized by comprising: acquiring device data indicating a result of an inspection regarding whether or not a condition of a measuring device for acquiring a measurement result necessary for determining a condition of a test object complies with predetermined rules; acquiring measurement data indicating the measurement result of the measuring device; and storing protected device data including the device data and a hash value of the device data in association with protected measurement data including the measurement data and a hash value of the measurement data.

In one aspect of the present invention, the measuring device measures measurement amounts necessary for determining the condition of the test object such as a vehicle. First device data related to the condition of the measuring device and second device data including the hash value of the first device data are stored. In addition, first measurement data indicating the measurement results of the measuring device and second measurement data including the hash value of the first measurement data are stored in association with second device data. The alteration of the first device data indicating the inspection result of the condition of the measuring device and the first measurement data indicating the measurement result is prevented.

A computer program according to one aspect of the present invention is characterized by causing a computer to execute processing of: acquiring device data indicating a result of an inspection regarding whether or not a condition of a measuring device for acquiring a measurement result necessary for determining a condition of a test object complies with predetermined rules; generating protected device data including the device data and a hash value of the device data; acquiring measurement data indicating the measurement result of the measuring device; generating protected measurement data including the measurement data and a hash value of the measurement data; and storing the protected device data and the protected measurement data in association with each other.

In one aspect of the present invention, the computer program generates the protected device data including the acquired device data and the hash value of the device data. In addition, the computer program generates the protected measurement data including the acquired measurement data and the hash value of the measurement data. Therefore, it is possible to store the protected device data and the protected measurement data in association with each other.

### Advantageous Effects of Invention

According to the present invention, the alteration of data related to measurements using the measuring device is prevented. Therefore, the present invention has an excellent effect, such as preventing the condition of a test object such as a vehicle from being incorrectly determined.

### Brief Description of Drawings

FIG. 1 is a schematic diagram showing an example of the configuration of a test object testing system according to the present embodiment.
FIG. 2 is a block diagram showing an example of the internal functional configuration of a measuring device.
FIG. 3 is a block diagram showing an example of the internal configuration of an information processing device.
FIG. 4 is a block diagram showing an example of the internal functional configuration of a node device included in a blockchain system.
FIG. 5 is a flowchart showing a first example of a procedure for processing to store measurement results obtained by a measuring device in an information processing device.
FIG. 6 is a conceptual diagram showing an example of the contents of device data.
FIG. 7 is a flowchart showing a second example of a procedure for processing to store measurement results obtained by a measuring device in an information processing device.
FIG. 8 is a flowchart showing an example of a procedure for processing to store the results of tests performed by the information processing device to determine the condition of a vehicle.
FIG. 9 is a conceptual diagram showing an example of the contents of result data.
FIG. 10 is a conceptual diagram showing an example of the contents of archival data.
FIG. 11 is a schematic diagram showing an example of the configuration of storage data stored by a blockchain.
FIG. 12 is a block diagram showing an example of the internal functional configuration of a terminal device.
FIG. 13 is a flowchart showing an example of a procedure for processing to output result data using a terminal device.
FIG. 14 is a flowchart showing a procedure of an example of a process executed by a test object testing system when transferring an NFT.

### Description of Embodiments

Hereinafter, the present invention will be specifically described with reference to the diagrams showing embodiments thereof.

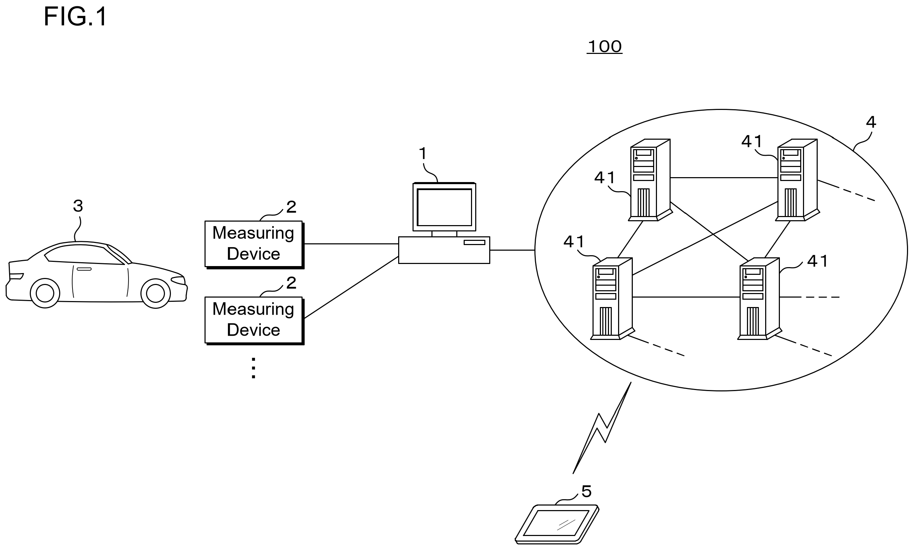

FIG. 1 is a schematic diagram showing an example of the configuration of a test object testing system 100 according to the present embodiment. The test object testing system 100 executes the information processing method. The test object testing system 100 is used to perform tests on a vehicle 3, which is the test object, in accordance with predetermined rules such as laws. The test of the vehicle 3 is a test for obtaining certification proving that the condition of the vehicle 3, such as an exhaust gas emission value or fuel efficiency, satisfies predetermined conditions specified in predetermined rules. The exhaust gas emission value is a value indicating the amount of gas emitted from the vehicle 3, such as the concentration of each component contained in the exhaust gas. The details of the test, such as the equipment used for the test and the test procedures, are specified in the predetermined rules. In the test, measurement values specified in the predetermined rules are measured, and it is determined whether or not the measurement results conform to the predetermined standards specified in the predetermined rules, thereby determining whether or not the condition of the vehicle 3 satisfies predetermined conditions specified in the predetermined rules. The test object testing system 100 includes a measuring device 2 that acquires the measurement results necessary for determining the condition of the vehicle 3. The test object testing system 100 includes a plurality of measuring devices 2. The number of measuring devices 2 may be one.

For example, the vehicle 3 performs simulated driving, and the measuring device 2 measures various measurement values before, during, or after the driving. For example, the measuring device 2 measures the concentrations of various components contained in the exhaust gas emitted from the vehicle 3. A plurality of measuring devices 2 may measure the concentrations of a plurality of components, or a single measuring device 2 may measure the concentrations of a plurality of components. For example, the measuring device 2 measures the mileage of the vehicle 3. For example, the measuring device 2 measures the amount of fuel consumed. The measuring device 2 may also be a device that measures measurement values related to the environment in which the vehicle is placed, such as temperature and humidity.

The test object testing system 100 includes an information processing device 1. The measuring device 2 may be connected to the information processing device 1 through a communication network such as a LAN (Local Area Network), or may be connected to the information processing device 1 through another device. The measuring device 2 transmits and receives data to and from the information processing device 1. The measuring device 2 communicates with the information processing device 1 through wired or wireless communication.

The information processing device 1 is connected to a blockchain system 4. The blockchain system 4 is configured to include a plurality of node devices 41 connected to each other. The plurality of node devices 41 are configured to realize a blockchain, which is one type of distributed ledger technology. The blockchain system 4 is a system in which a plurality of node devices 41 share data in a distributed manner. Each node device 41 stores substantially the same content of data. The blockchain system 4 may be a public blockchain or a private blockchain. Although four node devices 41 are shown in FIG. 1, the number of node devices 41 may be two or three, or may be more than four. The blockchain system 4 stores data related to the testing of the vehicle 3.

The test object testing system 100 includes a terminal device 5. The terminal device 5 transmits and receives data to and from the blockchain system 4. The terminal device 5 can acquire data related to the testing of the vehicle 3 stored in the blockchain system 4.

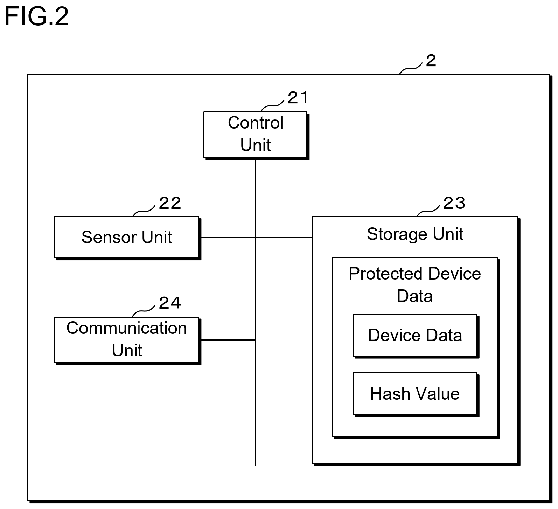

FIG. 2 is a block diagram showing an example of the internal functional configuration of the measuring device 2. The measuring device 2 includes a control unit 21, a sensor unit 22, a storage unit 23, and a communication unit 24. The control unit 21 includes a processor and a memory, and controls each unit of the measuring device 2. The sensor unit 22 measures measurement values necessary for determining the condition of the vehicle 3, such as the concentrations of components contained in exhaust gas. The storage unit 23 is non-volatile. For example, the storage unit 23 is a non-volatile semiconductor memory or a hard disk. The communication unit 24 communicates with the information processing device 1 through wired communication or wireless communication.

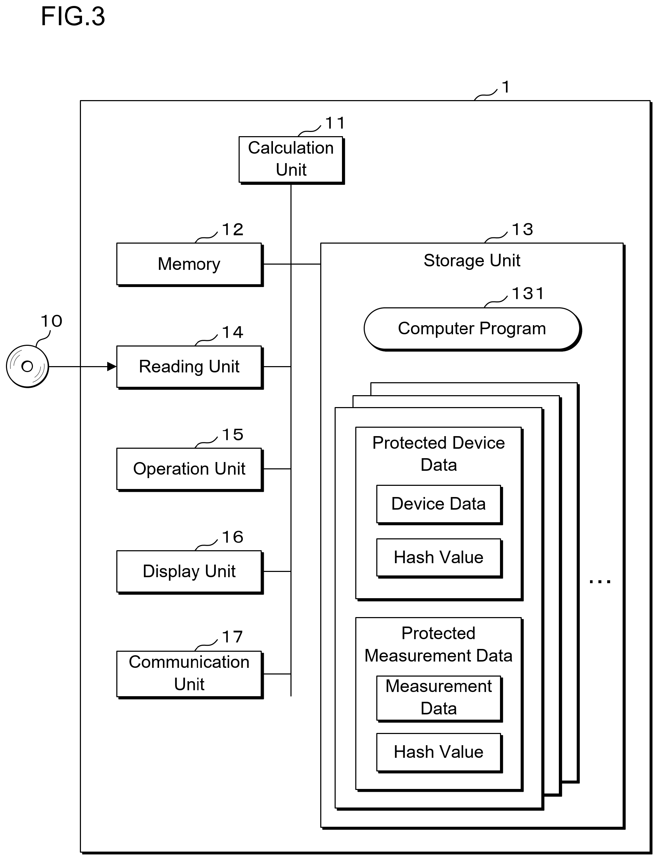

FIG. 3 is a block diagram showing an example of the internal configuration of the information processing device 1. The information processing device 1 is configured using a computer such as a personal computer or a server device. The information processing device 1 includes a calculation unit 11, a memory 12 for storing temporary data generated during calculation, a storage unit 13, a reading unit 14, an operation unit 15, a display unit 16, and a communication unit 17. The calculation unit 11 is configured using, for example, a CPU (Central Processing Unit), a GPU (Graphics Processing Unit), or a multi-core CPU. The calculation unit 11 may be configured using a quantum computer. The memory 12 is, for example, a RAM (Random Access Memory). The storage unit 13 is non-volatile, and is, for example, a hard disk or a non-volatile semiconductor memory. The reading unit 14 reads information from a recording medium 10 such as an optical disk or a portable memory.

The operation unit 15 receives input of information, such as text, by receiving an operation from the user. The operation unit 15 is, for example, a touch panel, a keyboard, or a pointing device. The display unit 16 displays an image. The display unit 16 is, for example, a liquid crystal display or an EL display (Electroluminescent Display). The operation unit 15 and the display unit 16 may be integrated as a single unit. The communication unit 17 communicates with the outside of the information processing device 1 through wired communication or wireless communication. For example, the information processing device 1 communicates with the measuring device 2 through the communication unit 17. The information processing device 1 may be configured using a plurality of computers.

The calculation unit 11 causes the reading unit 14 to read a computer program 131 recorded on the recording medium 10, and causes the storage unit 13 to store the read computer program 131. The calculation unit 11 executes processing required for the information processing device 1 in accordance with the computer program 131. Alternatively, the computer program 131 may be stored in advance in the storage unit 13 or may be downloaded from the outside of the information processing device 1. In this case, the information processing device 1 may not include the reading unit 14. The computer program 131 may be a computer program product.

The computer program 131 can be loaded so as to run on a single computer, or can be loaded so as to run on a plurality of computers interconnected through a communication network by being located at one site or distributed across a plurality of sites. That is, the computer program 131 may be executed on a plurality of computers connected through a communication network, and the information processing device 1 may be configured by a plurality of computers connected to each other through a communication network. The information processing device 1 may be configured using a cloud server.

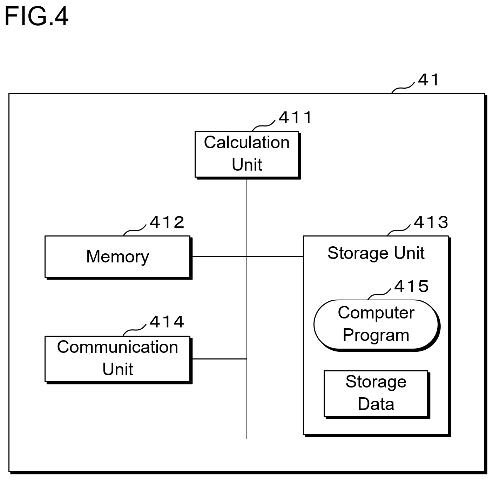

FIG. 4 is a block diagram showing an example of the internal functional configuration of the node device 41 included in the blockchain system 4. All of the plurality of node devices 41 included in the blockchain system 4 have the same configuration. The node device 41 is configured using a computer such as a server device. The node device 41 includes a calculation unit 411, a memory 412, a storage unit 413, and a communication unit 414. The calculation unit 411 is configured using, for example, a CPU, a GPU, or a multi-core CPU. In addition, the calculation unit 411 may also be configured using a quantum computer. The memory 412 is, for example, a RAM. The storage unit 413 is non-volatile, and is, for example, a hard disk. The communication unit 414 communicates with the outside of the node device 41. For example, the communication unit 414 is connected to other node devices 41 through a communication network, such as the Internet or a LAN, and transmits and receives data to and from the other node device 41.

The storage unit 413 stores a computer program 415. The calculation unit 411 executes processing required for the node device 41 in accordance with the computer program 415. The storage unit 413 stores storage data related to the testing of the vehicle 3. The plurality of node devices 41 executes processing for managing storage data in a distributed manner.

The calculation unit 411 executes processing required for the node device 41, such as data reception processing, consensus formation processing, and data transmission processing, in accordance with the computer program 415. The calculation unit 411 receives data from the information processing device 1 or other node devices 41, verifies the validity of the received data based on an electronic signature, generates a block including the data whose validity has been confirmed, and performs processing to link the generated block to the blockchain of storage data.

The calculation unit 411 performs processing to form a consensus with other node devices 41 regarding the addition of a block to the blockchain. Existing techniques are used for the consensus formation processing. The calculation unit 411 may form consensus by majority vote or the like. The calculation unit 411 performs processing to transmit the received data to other node devices 41. In addition, the calculation unit 411 performs processing to transmit information included in the storage data in response to a request from the outside of the blockchain system 4. In addition, the information processing device 1 may also function as one of the node devices 41.

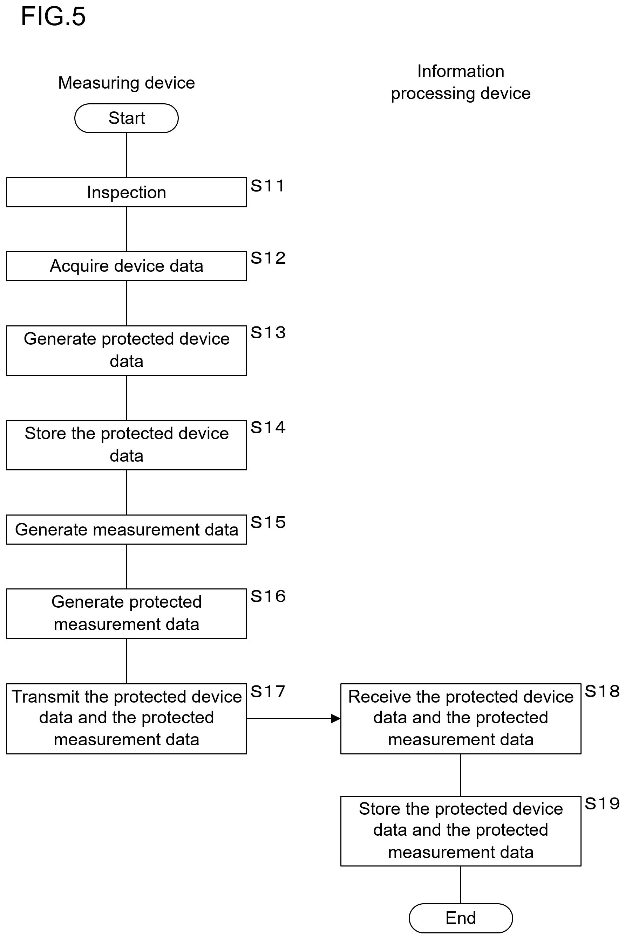

Hereinafter, the process executed by the test object testing system 100 will be described. The measuring device 2 acquires measurement results necessary for determining the condition of the vehicle 3, and the information processing device 1 stores the measurement results. FIG. 5 is a flowchart showing a first example of a procedure for processing to store measurement results obtained by the measuring device 2 in the information processing device 1. Hereinafter, steps will be abbreviated as S. The information processing device 1 executes processing by the calculation unit 11 executing information processing in accordance with the computer program 131.

In predetermined rules regarding the testing of the vehicle 3, it is stipulated that the condition of the measuring device 2, such as its settings or performance, should comply with the rules when testing the vehicle 3. In accordance with the predetermined rules, an inspection is performed as needed to determine whether or not the condition of the measuring device 2, such as its settings or performance, complies with the predetermined rules (S11). When the condition of the measuring device 2 satisfies the predetermined requirements, it is determined that the condition of the measuring device 2 complies with the predetermined rules. For example, the measuring device 2 is a device that measures the concentration of a specific component contained in the exhaust gas and acquires numerical values for the concentration using a calibration curve. For example, in an inspection, the concentration of a specific component contained in the inspection gas is measured by the measuring device 2, and it is determined whether or not the error between the actual concentration and the measured concentration falls within a predetermined standard. A plurality of types of inspections are performed for each measuring device 2. If the condition of the measuring device 2 complies with the predetermined rules, the measuring device 2 passes the inspection. If the device does not pass the inspection, the measuring device 2 is replaced, or the condition of the measuring device 2, such as its settings or performance, is adjusted. Only the measuring device 2 that has passed the inspection is used for testing the vehicle 3.

After the end of the inspection, the measuring device 2 acquires device data indicating the result of the inspection regarding whether or not the condition of the measuring device 2 complies with the predetermined rules (S12). For example, the measuring device 2 acquires the device data by the device data being input to the measuring device 2 through an interface (not shown). For example, the measuring device 2 may generate device data based on the input inspection results. For example, the person who performed the inspection may input the inspection results through the communication unit 24 or an interface (not shown).

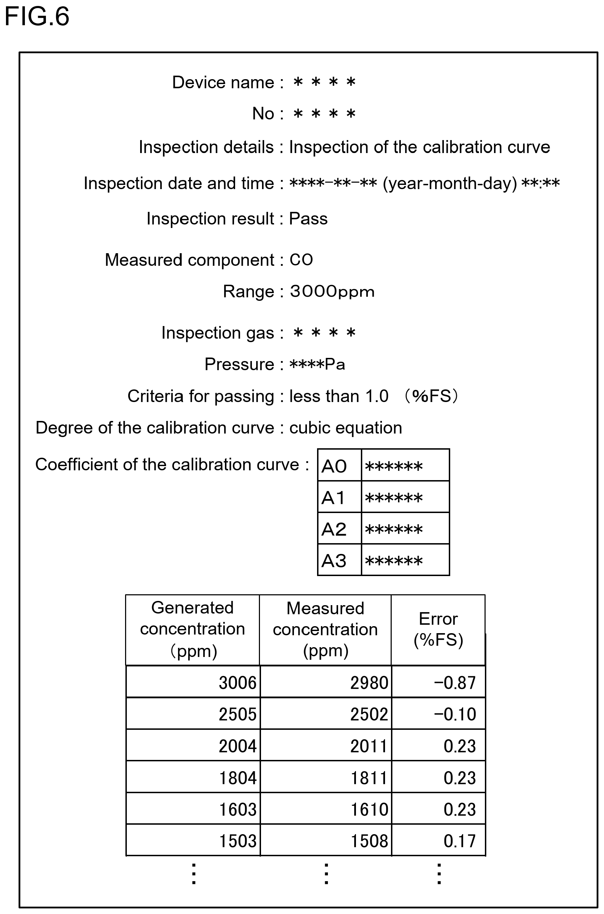

FIG. 6 is a conceptual diagram showing an example of the contents of device data. As an inspection result, a result of the inspection of the calibration curve used by the measuring device 2 is shown. In the device data, the device name and number are recorded as information for identifying the measuring device 2, and the inspection details and the inspection date and time when the inspection was performed are recorded. It is recorded that the component measured by the measuring device 2 is carbon monoxide (CO), and the range of the measured concentration value is 3000 ppm. The type of inspection gas, the pressure at the time of inspection, and the criteria for passing the inspection are recorded. The passing criteria are predetermined requirements specified in predetermined rules for the measuring device 2 used to test the vehicle 3. In the example shown in FIG. 6, the criterion is that the percentage error (%FS) of the measured concentration relative to the full scale of the concentration measurement range, that is, 3000 ppm, is less than 1.0 in absolute value.

The device data records the results of the inspection regarding whether or not the settings for measurement by the measuring device 2 satisfy the conditions predetermined for testing the vehicle 3. In the example shown in FIG. 6, a calibration curve for measuring the CO concentration is recorded as a setting. It is recorded that, in order to satisfy the predetermined conditions, the calibration curve is a cubic equation and each coefficient of the calibration curve has a predetermined value. In addition, the device data also records the results of the inspection regarding whether or not the measurement performance of the measuring device 2 satisfies the criteria predetermined for testing the vehicle 3. In the example shown in FIG. 6, as the results of inspecting the performance, the generated CO concentration during the inspection, the concentration measured by the measuring device 2, and the error are recorded. For a plurality of measurements at different concentrations, the errors between the generated concentration and the measured concentration satisfy the predetermined criteria, and the inspection result is a pass.

The device data proves that the settings and performance of the measuring device 2 satisfy the requirements necessary for testing the vehicle 3. It is expected that accurate measurement values that can be used as the basis for testing the vehicle 3 will be obtained from the measuring device 2, and the reliability of the measurement values is guaranteed by the device data. As a result, the reliability of the test results based on the measurement values obtained by the measuring device 2 is secured.

A plurality of types of inspections may be performed for a single measuring device 2, and the measuring device 2 may acquire a plurality of types of device data. For example, the measuring device 2 may be capable of measuring the concentrations of a plurality of components contained in exhaust gas, and an inspection may be performed for each component to acquire device data.

The measuring device 2 calculates a hash value of the acquired device data, and generates protected device data including the device data and the hash value of the device data (S13). In S13, the control unit 21 performs processing to calculate the hash value and generate the protected device data. The measuring device 2 stores the generated protected device data (S14). In S14, the control unit 21 causes the storage unit 23 to store the protected device data.

When a plurality of types of device data are acquired, the measuring device 2 generates a plurality of types of protected device data and stores the plurality of types of protected device data. The measuring device 2 may be inspected multiple times. The processes of S11 to S14 are executed as necessary. For example, the processes of S11 to S14 are periodically and repeatedly executed at cycles specified in predetermined rules. For example, the storage unit 23 stores protected device data corresponding to the last inspection.

With the protected device data stored in the storage unit 23, the vehicle 3 is tested. The measuring device 2 acquires the measurement results necessary for determining the condition of the vehicle 3 in the testing of the vehicle 3 according to predetermined rules, and generates measurement data indicating the measurement results (S15). In S15, the sensor unit 22 acquires the measurement results by measuring the measurement values determined by the predetermined rules, and the control unit 21 generates the measurement data. The measurement results include the measurement values. For example, measurement values of the concentrations of components contained in the exhaust gas of the vehicle 3 are recorded in the measurement data. The measuring device 2 acquires measurement data by generating the measurement data.

The measuring device 2 calculates a hash value of the generated measurement data, and generates protected measurement data including the measurement data and the hash value of the measurement data (S16). In S16, the control unit 21 performs processing to calculate the hash value and generating the protected measurement data. The measuring device 2 transmits the protected device data and the protected measurement data to the information processing device 1 (S17). In S17, the control unit 21 causes the communication unit 24 to transmit the protected device data stored in the storage unit 23 and the generated protected measurement data to the information processing device 1. When a plurality of types of protected device data are stored, the measuring device 2 transmits the plurality of types of protected device data and the protected measurement data.

The information processing device 1 receives the protected device data and the protected measurement data transmitted from the measuring device 2 through the communication unit 17 (S18). The information processing device 1 stores the received protected device data and protected measurement data (S19). In S19, the calculation unit 11 stores the protected device data and the protected measurement data in the storage unit 13 in association with each other. When the measuring device 2 transmits a plurality of types of protected device data and protected measurement data, the information processing device stores the plurality of types of protected device data and the protected measurement data in the storage unit 13 in association with each other. After the end of S19, the information processing device 1 ends the process of storing the measurement results.

When testing the vehicle 3, the measuring device 2 may perform measurement multiple times. In this case, the measuring device 2 executes the processes of S15 to S17 multiple times. The information processing device 1 stores the protected device data and the protected measurement data for each of a plurality of measurements. The processes of S11 to S17 are executed in each measuring device 2 included in the test object testing system 100, and the information processing device 1 stores the protected device data and the protected measurement data for each measuring device 2.

If the measurement data has been altered, the condition of the vehicle 3 is incorrectly determined based on the altered measurement data. In the present embodiment, the measurement data is stored together with the hash value of the measurement data. If the measurement data has been altered, the hash value of the altered measurement data does not match the stored hash value. For this reason, the alteration of the measurement data is prevented.

If the device data has been altered, an inappropriate measuring device 2 is used, the measurement results from the measuring device 2 are inaccurate. Accordingly, there is a risk that the condition of the vehicle 3 will be incorrectly determined based on the inaccurate measurement results. In the present embodiment, the device data is stored along with the hash value of the device data. If the device data has been altered, the hash value of the altered device data will no longer match the stored hash value. For this reason, the alteration of the device data indicating the inspection results of the condition of the measuring device 2 is prevented. Since the alteration of the device data and the measurement data is prevented, it is possible to prevent the condition of the vehicle 3 from being incorrectly determined.

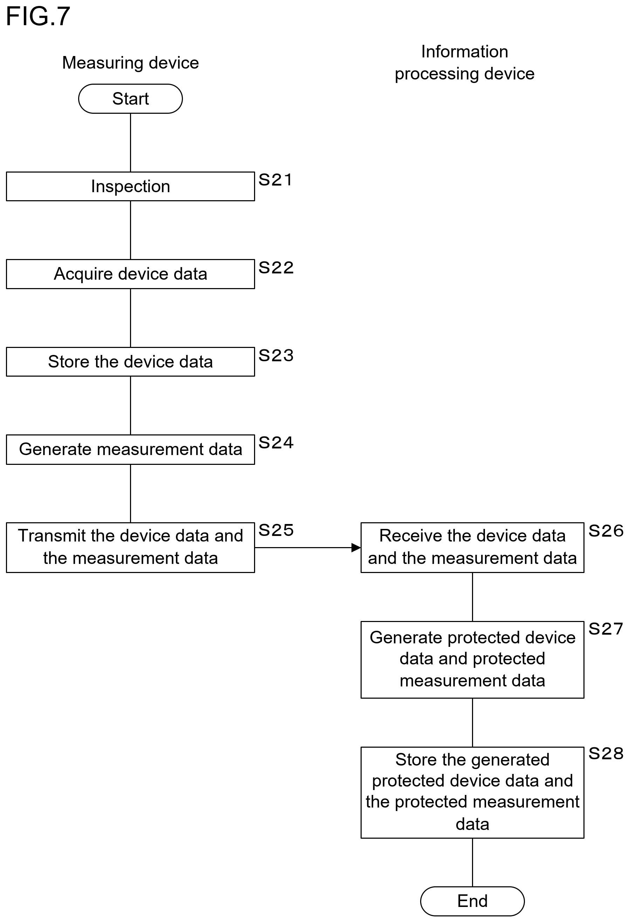

The test object testing system 100 may be configured such that the information processing device 1 calculates the hash value. FIG. 7 is a flowchart showing a second example of a procedure for processing to store measurement results obtained by the measuring device 2 in the information processing device 1. The process shown in FIG. 7 is a process in which the information processing device 1 calculates a hash value. As in S11, the measuring device 2 is inspected (S21), and as in S12, the measuring device 2 acquires device data (S22). The measuring device 2 stores the device data (S23). In S23, the control unit 21 stores the acquired device data in the storage unit 23. The processes of S21 to S23 are executed as necessary.

With the device data stored in the storage unit 23, the vehicle 3 is tested. The measuring device 2 generates measurement data (S24). The measuring device 2 transmits the protected device data and the protected measurement data to the information processing device 1 (S25). The information processing device 1 receives the device data and measurement data transmitted from the measuring device 2 (S26). The calculation unit 11 receives the device data and the measurement data through the communication unit 17, thereby acquiring the device data and the measurement data.

The information processing device 1 generates protected device data and protected measurement data (S27). In S27, the calculation unit 11 calculates a hash value of the device data, and generates protected device data including the device data and the hash value of the device data. In addition, the calculation unit 11 calculates a hash value of the measurement data, and generates protected measurement data including the measurement data and the hash value of the measurement data. The information processing device 1 stores the generated protected device data and protected measurement data (S28). In S28, the calculation unit 11 stores the protected device data and the protected measurement data in the storage unit 13 in association with each other. After the end of S28, the information processing device 1 ends the process of storing the measurement results. In the present embodiment as well, since the alteration of the device data and measurement data is prevented, it is possible to prevent the condition of the vehicle 3 from being incorrectly determined.

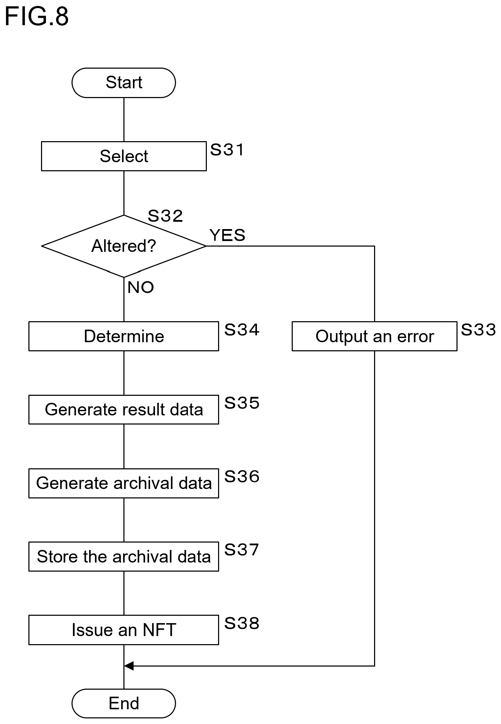

The information processing device 1 performs processing for determining whether or not the condition of the vehicle 3 satisfies predetermined conditions specified in predetermined rules, based on the stored protected device data and protected measurement data. FIG. 8 is a flowchart showing an example of a procedure for processing in which the information processing device 1 determines the condition of the vehicle 3 and stores the test results. The information processing device 1 selects, from the plurality of pieces of protected device data and protected measured data stored therein, protected device data and protected measurement data to be used for determining the condition of the vehicle 3 (S31). In S31, the calculation unit 11 selects, from the plurality of pieces of protected device data and protected measurement data stored in the storage unit 13, protected device data and protected measurement data that serve as the basis for determining the condition of the vehicle 3. For example, a plurality of pieces of protected device data and protected measurement data are selected. For example, the calculation unit 11 selects the latest protected device data and protected measurement data, from the protected device data and the protected measurement data obtained multiple times, for each measuring device 2.

The information processing device 1 determines whether or not the selected protected device data and protected measurement data have been altered (S32). In S32, the calculation unit 11 determines whether or not there has been an alteration based on the hash values included in the protected device data and the protected measurement data. Specifically, the calculation unit 11 calculates a hash value of the device data included in the protected device data, and determines whether or not the calculated hash value matches the hash value included in the protected device data. The calculation unit 11 determines that there is no alteration in the protected device data if the hash values match, and determines that there has been an alteration in the protected device data if the hash values do not match. In addition, the calculation unit 11 calculates a hash value of the measurement data included in the protected measurement data, and determines whether or not the calculated hash value matches the hash value included in the protected measurement data. The calculation unit 11 determines that there is no alteration in the protected measurement data if the hash values match, and determines that there has been an alteration in the protected measurement data if the hash values do not match.

If the selected protected device data or protected measurement data has been altered (S32: YES), the information processing device 1 outputs an error (S33) and ends the process. In S33, the calculation unit 11 displays, on the display unit 16, an error image notifying that the protected device data or the protected measurement data has been altered. If the protected device data has been altered, the hash value of the device data included in the second data will no longer match the hash value included in the second data, making it possible to detect the alteration. Similarly, even if the protected measurement data has been altered, the alteration can be detected.

If the selected protected device data or protected measurement data has not been altered (S32: NO), the information processing device 1 determines the condition of the vehicle 3 using the selected protected device data and protected measurement data (S34). The criteria for the determination are specified in predetermined rules and stored in advance in the storage unit 13. In S34, the calculation unit 11 determines the condition of the measuring device 2 based on the device data included in the selected protected device data. For example, when it is recorded in the device data that the inspection result is a pass, the calculation unit 11 determines that the condition of the measuring device 2 complies with the predetermined rules.

In addition, the calculation unit 11 determines the condition of the vehicle 3 based on the measurement data included in the selected protected measurement data. More specifically, the calculation unit 11 determines whether or not the condition of the vehicle 3 is a predetermined condition depending on whether or not the measurement results indicated by the measurement data conform to predetermined standards. For example, the measurement values of the concentrations of components contained in the exhaust gas of the vehicle 3 are recorded in the measurement data, and the calculation unit 11 determines whether or not the concentration of each component falls within a predetermined range. The fact that the concentration of each component falls within the predetermined range corresponds to the measurement results conforming to predetermined standards. When the concentration of each component falls within the predetermined range, the calculation unit 11 determines that the exhaust gas emission value is appropriate. The fact that the exhaust gas emission value is appropriate corresponds to the condition of the vehicle 3 being a predetermined condition. The calculation unit 11 performs a determination for each of the selected plurality of pieces of protected device data and protected measurement data. In S32, the calculation unit 11 may perform the determination by displaying the contents of the device data or the measurement data on the display unit 16 so that the user checks the displayed contents and receiving the determination results input by the user operating the operation unit 15.

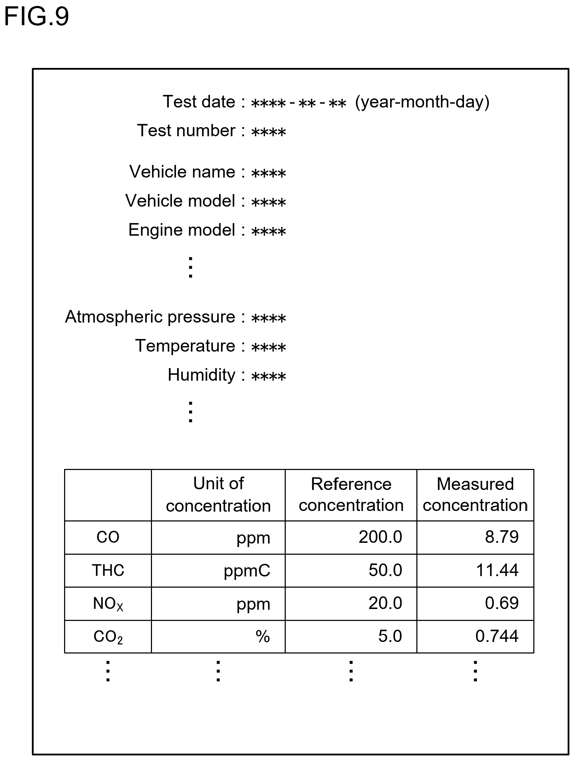

The information processing device 1 generates result data in which the test results are recorded (S35). FIG. 9 is a conceptual diagram showing an example of the contents of the result data. Results of test in which measurements are performed by the measuring device 2 and the condition of the vehicle 3 is determined based on the measurement results are recorded. In the result data, information for identifying the test, such as the test date and test number, is recorded. In the result data, information for identifying the vehicle 3, such as the vehicle name, vehicle model, and/or engine model, is recorded. In the result data, information regarding the environment, such as atmospheric pressure, temperature, and/or humidity, is recorded.

In the result data, a comparison between the test criteria and the measurement results recorded in the measurement data is recorded. In the example shown in FIG. 9, a comparison between the measured concentration of each component contained in the exhaust gas of the vehicle 3 and the reference concentrations is shown. THC is total hydrocarbons, NOₓ is nitrogen oxides, and CO₂ is carbon dioxide. The unit of THC concentration is ppmC (Parts Per Million Carbon). In the example shown in FIG. 9, the measured concentration of each component falls within the reference concentration range. Thus, the result data includes the result of determining the condition of the vehicle 3 based on the measurement results. In the result data, a certificate that the user has authenticated the result of determining that the vehicle 3 is in a predetermined condition may be recorded. In S32, the calculation unit 11 generates result data based on the test results.

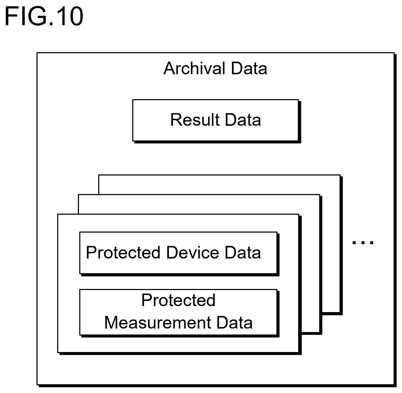

The information processing device 1 generates archival data in which the protected device data and the protected measurement data used in the test are associated with the result data (S36). FIG. 10 is a conceptual diagram showing an example of the contents of the archival data. The archival data includes the result data and the protected device data and protected measurement data used in the test, that is, the protected device data and protected measurement data selected in S31. If a plurality of pieces of protected device data and protected measurement data are used in the test, the plurality of pieces of protected device data and protected measurement data are included in the archival data. In S36, archival data is generated that includes the result data and the protected device data and the protected measurement data used in the test. In addition, the archival data may include the result data and information for identifying the protected device data and the protected measurement data. For example, the protected device data and the protected measurement data may be stored in the storage unit 13 or a storage device other than the information processing device 1, and link information for accessing the protected device data and the protected measurement data may be included in the archival data. In this manner, in the archival data, the protected device data and the protected measurement data are associated with the result data.

The information processing device 1 stores the archival data in a blockchain realized by the blockchain system 4 (S37). In S37, the calculation unit 11 causes the communication unit 17 to transmit the archival data to the blockchain system 4 in order to generate a transaction including the archival data. By storing the archival data in the blockchain, the result data included in the archival data is stored in the blockchain.

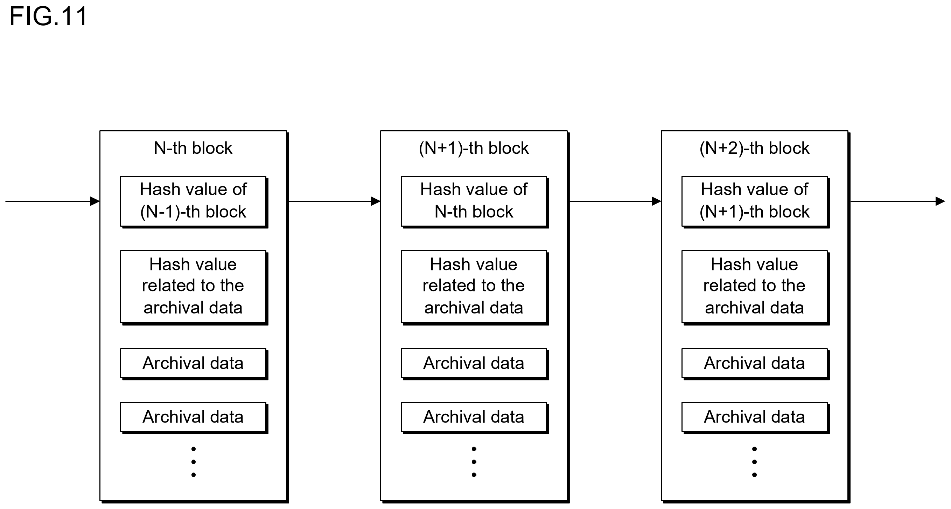

FIG. 11 is a schematic diagram showing an example of the configuration of storage data stored by a blockchain. The storage data has a so-called blockchain structure, that is, a data structure in which a plurality of blocks are connected in a chain. FIG. 11 shows an example in which three blocks, N-th, (N+1)-th, and (N+2)-th blocks, are connected together. Each block includes a hash value calculated based on the information of the preceding block and a plurality of pieces of archival data. Each piece of archival data corresponds to a transaction. In addition, each block includes a hash value related to the archival data included in that block. This hash value is, for example, a hash value calculated based on a plurality of hash values of a plurality of pieces of archival data included in the block.

An electronic signature is affixed to each piece of archival data included in the storage data stored by the blockchain. The electronic signature is created using a private key held by the creator of the archival data, and it is possible to verify the validity of the information by using the creator's public key. For example, the information processing device 1 can calculate a hash value based on the archival data, encrypt the calculated hash value with a private key, and affix the encrypted value to the archival data as an electronic signature. The archival data may include a public key for verifying the electronic signature.

In S37, the information processing device 1 transmits the archival data to one of the node devices 41 included in the blockchain system 4. The node device 41 receives the archival data through the communication unit 414. The calculation unit 411 verifies the validity of the received archival data based on the electronic signature. The calculation unit 411 generates a block including the archival data whose validity has been confirmed, and performs processing to link the generated block to the blockchain of the archival data. The calculation unit 411 performs processing to form a consensus with other node devices 41 regarding the addition of a block. In this manner, the archival data is stored in the blockchain.

The archival data stored by the blockchain is included in a block, and the hash value of each block is included in other blocks. If the archival data has been altered, the hash value of the block including the altered archival data will no longer match the hash value contained in other blocks, making it difficult to alter the archival data. For this reason, the alteration of result data included in the archival data is prevented, and the alteration of protected device data and protected measurement data associated with the result data is also prevented. In this manner, the information processing device 1 can prevent the test results of the vehicle 3 from being altered.

The information processing device 1 issues an NFT (Non-Fungible Token) associated with the result data stored in the blockchain (S38). In S38, the calculation unit 11 performs processing to issue an NFT using the blockchain. For example, an NFT based on ERC721, which is one of the smart contract standards, is issued. Index data including a token ID, owner address, and token URI (Uniform Resource Identifier) is stored by the blockchain using the blockchain system 4.

The owner address is an address indicating the owner of the NFT and corresponds to the owner's wallet address. For example, the initial owner of the NFT is the testing company that tested the vehicle 3. The token URI is information indicating the location where the NFT's metadata is stored. The metadata includes a URL (Uniform Resource Locator) of the content data indicating the identified content. The metadata may be stored in a blockchain using the blockchain system 4, or may be stored in a storage device outside the blockchain, such as the information processing device 1. For example, the URL included in the metadata points to specific archival data or specific result data stored in the blockchain. In this manner, an NFT associated with the result data is issued.

The information processing device 1 transmits the issued NFT to the owner. For example, the information processing device 1 transmits the issued NFT to the terminal device 5 used by the owner of the NFT. At this time, the calculation unit 11 transmits the NFT by transmitting the index data including the token ID, the owner address, and the token URI from the communication unit 17. Alternatively, the information processing device 1 may transmit the NFT by transmitting access information, such as a private key, required to access the index data of the NFT stored in the blockchain. The information processing device 1 may provide the NFT to the owner by performing a process of recording access information, such as a private key, in the owner's wallet.

After the end of S38, the information processing device 1 ends the process of determining the vehicle 3 and storing the test results. The information processing device 1 executes the processes of S31 to S38 as necessary. For example, when the user operates the operation unit 15 to input an instruction to determine the vehicle 3, the information processing device 1 executes the processes of S31 to S38. The information processing device 1 may omit the process of S38 without issuing an NFT. Alternatively, the information processing device 1 may omit any or all of the processes of S31 to S36. For example, the information processing device 1 may use all of the pieces of protected device data and protected measurement data without selecting data, and may not determine whether or not the data has been altered. For example, the information processing device 1 may store the protected device data and the protected measurement data in the blockchain as archival data without determining the condition of the vehicle 3.

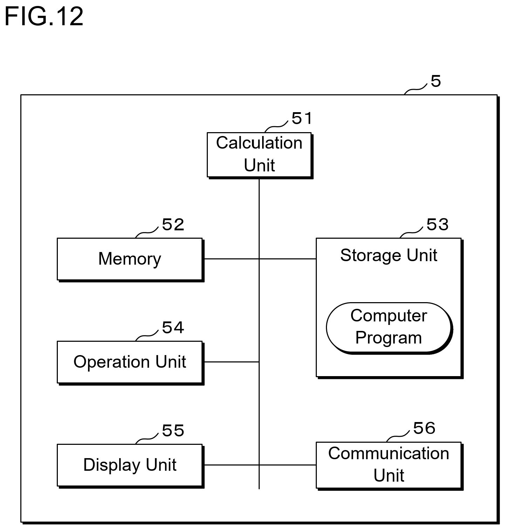

The record data in which the results of the test for determining the condition of the vehicle 3 are recorded can be output using the terminal device 5. FIG. 12 is a block diagram showing an example of the internal functional configuration of the terminal device 5. The terminal device 5 is configured using a computer such as a personal computer, a tablet, or a smartphone. The terminal device 5 includes a calculation unit 51, a memory 52, a storage unit 53, an operation unit 54, a display unit 55, and a communication unit 56. The calculation unit 51 is configured using, for example, a CPU, a GPU, or a multi-core CPU. The calculation unit 51 may be configured using a quantum computer. The memory 52 is, for example, a RAM. The storage unit 53 is non-volatile, and is, for example, a hard disk or a non-volatile semiconductor memory.

The operation unit 54 receives input of information by receiving an operation from the user. The operation unit 54 is, for example, a touch panel. The display unit 55 displays an image. The display unit 55 is, for example, a liquid crystal display or an EL display. The operation unit 54 and the display unit 55 may be integrated as a single unit. The communication unit 56 communicates with the outside of the terminal device 5 through wired or wireless communication. For example, the terminal device 5 communicates with the blockchain system 4 through the communication unit 56.

The storage unit 53 stores a computer program. The computer program is stored in advance in the storage unit 53 or may be downloaded from the outside of the terminal device 5. The calculation unit 51 executes processing required for the terminal device 5 in accordance with the computer program stored in the storage unit 53. The computer program may be a computer program product.

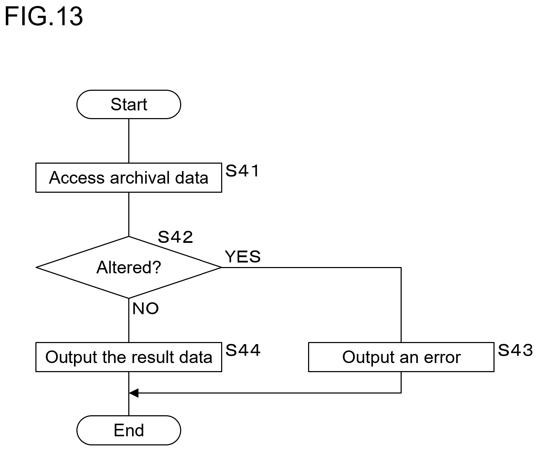

FIG. 13 is a flowchart showing an example of a procedure for processing to output result data using the terminal device 5. The terminal device 5 accesses archival data including result data (S41). For example, the terminal device 5 used by the owner of the NFT receives the index data of the NFT or access information required to access the index data, and stores it in the storage unit 53. In S41, the calculation unit 51 accesses the metadata according to the token URI included in the index data, and accesses the archival data according to the URL included in the metadata. The calculation unit 51 performs processing to download the accessed archival data from the blockchain.

The terminal device 5 determines whether or not the accessed archival data has been altered (S42). In S42, the calculation unit 51 determines whether or not there has been an alteration based on the hash value stored in the blockchain. For example, the calculation unit 11 determines whether or not there has been an alteration based on whether or not the hash value included in the block including the target archival data matches the value calculated as the hash value for the archival data included in that block. For example, the calculation unit 11 calculates the hash value of a block including the target archival data, reads the hash value of that block from other blocks, and determines whether or not there has been an alteration based on whether or not the calculated hash value matches the read hash value. If the archival data has been altered, the result data included in the archival data may have been altered. Therefore, by determining whether or not the archival data has been altered, it is possible to determine whether or not the result data stored in the blockchain has been altered.

If the archival data has been altered (S42: YES), the terminal device 5 outputs an error (S43) and ends the process. In S43, the calculation unit 51 displays, on the display unit 55, an error image notifying that the archival data has been altered. If the archival data has been altered, the hash value included in the block including the archival data will no longer match the value calculated as the hash value for the archival data. In addition, the hash value of the block including the archival data will no longer match the hash value of that block stored in other blocks. Therefore, it is possible to detect the alteration of archival data.

If the archival data has not been altered (S42: NO), the terminal device 5 outputs the result data (S44). In S44, the calculation unit 51 outputs the result data by displaying, on the display unit 55, an image including the result data included in the accessed archival data. The terminal device 5 may output the result data by transmitting the result data to other devices or by printing the result data. At this time, the calculation unit 51 may also output the protected device data or the protected measurement data associated with the result data, or may also output the device data included in the protected device data or the measurement data included in the protected measurement data. Since the result data is associated with the protected device data and the protected measurement data, it is possible to refer to the protected device data, the protected measurement data, the device data or the measurement data.

After the end of S44, the terminal device 5 ends the process. The terminal device 5 executes the processes of S41 to S44 as necessary. For example, when the user operates the operation unit 54 to input an instruction to output the test results, the information processing device 1 executes the processes of S41 to S44. The user can check the results of the test for determining the condition of the vehicle 3 by checking the result data as necessary.

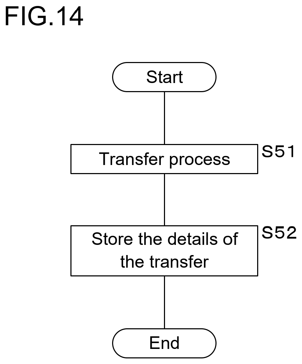

The NFT associated with the result data can be transferred. FIG. 14 is a flowchart showing a procedure of an example of a process executed by the test object testing system 100 when transferring an NFT. The test object testing system 100 performs a transfer process for transferring the NFT (S51). For example, the user of the terminal device 5 operates the operation unit 54 to input an instruction to transfer the NFT, and the terminal device 5 transmits an instruction to transfer the NFT to the blockchain system 4. The blockchain system 4 transfers the NTF by changing the owner address included in the stored index.

The test object testing system 100 stores the details of the transfer (S52). The blockchain system 4 stores the history of changes in the ownership of the NFT. After the end of S52, the test object testing system 100 ends the process for transferring the NFT. The test object testing system 100 executes the processes of S51 and S52 as necessary. By the transfer of the NFT, the ownership of the NFT changes. For example, the owner of the NFT associated with the result data changes in the order of: the inspection company, the manufacturer of vehicle 3, the user who purchased the vehicle 3, the used car dealer who purchased the vehicle 3, and the user who purchased the vehicle 3 from the used car dealer. The user of the NFT can check the result data and can check the results of the test for the vehicle 3. By the transfer of the NFT, anyone who needs to check the test results from time to time can acquire the NFT and check the test results. Since the details of the transfer of the NFT are stored, it is possible to check the ownership history of the NFT, and it is also possible to track the viewers of the record data.

As described above in detail, in the present embodiment, the protected device data including the device data related to the condition of the measuring device 2 and the hash value of the device data is stored. In the testing of the vehicle 3, the protected measurement data including the measurement data indicating the measurement results of the measuring device 2 and the hash value of the measurement data is stored. The alteration of the device data indicating the inspection results of the device condition of the measuring device 2 and the measurement data indicating the measurement results of the measuring device 2 is prevented. Since the alteration of the device data is prevented, it is possible to use only the measuring device 2 that satisfies the requirements necessary for testing the vehicle 3, based on the device data, and the measurement results obtained by the measuring device 2 are accurate. Therefore, it is prevented that the condition of the vehicle 3 is incorrectly determined based on inaccurate measurement results. In addition, since the alteration of the measurement data is prevented, it is prevented that the condition of the vehicle 3 is incorrectly determined based on altered measurement results. Since the condition of the vehicle 3 is not incorrectly determined, an inappropriate vehicle 3 whose condition does not satisfy the conditions specified in predetermined rules is not mistakenly certified, and accordingly, the sale of an inappropriate vehicle is prevented.

In addition, during testing of the vehicle 3, the condition of the vehicle 3 is determined based on the device data and measurement data included in the protected device data and the protected measurement data. The result data, which includes the results of determining the condition of the vehicle 3 and indicates the results of the test, is stored in the blockchain in association with the protected device data and the protected measurement data. By storing the result data in the blockchain, the alteration of the test results of the vehicle 3 is prevented. By preventing alteration, the reliability of the test results of the vehicle 3 is improved. This prevents an inappropriate vehicle 3 from being mistakenly certified based on altered test results. As a result, the condition of the vehicle 3 that is developed or sold can be guaranteed.

In the present embodiment, an example of a test for determining the condition of the vehicle 3 by measuring the concentrations of components contained in exhaust gas has mainly been shown. However, the measurement values required to determine the condition of the vehicle 3 in the test may be measurement values other than the concentrations of components contained in exhaust gas. For example, the measurement value required to determine the condition of the vehicle 3 in the test may be the amount of fuel consumed, the amount of tire dust, or the amount of brake dust. In addition, the vehicle 3 may be tested for the condition of the vehicle 3 other than exhaust gas emission values. For example, tests regarding the fuel efficiency and efficiency of power consumption of the vehicle 3 may be performed, or tests regarding the hydrogen consumption of the vehicle 3 that uses hydrogen may be performed.

In the present embodiment, a form has been shown in which the test object is the vehicle 3, but the test object may be something other than the vehicle 3. For example, the test object may be a product for testing, such as the vehicle 3, a battery, or a fuel cell. For example, the test object may also be various types of samples, including a gas sample such as atmospheric air or a liquid sample such as river water or seawater. For example, components contained in waste or wastewater discharged from a factory may be measured, and a test may be performed to determine the status of the factory with respect to the discharge values of the waste or wastewater. For example, a test may be performed regarding the amount of impurities contained in a material or the amount of additives contained in an industrial product or food.

The present invention is not limited to the content of the above-described embodiments, and various changes can be made within the scope of the claims. That is, embodiments obtained by combining technical means appropriately changed within the scope of the claims are also included in the technical scope of the present invention.

The features described in the respective embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multi-multi claim) that cites at least one multi-claim can also be used.

### Reference Signs List

- 100: test object testing system
- 1: information processing device
- 11: calculation unit
- 13: storage section
- 131: computer program
- 2: measuring device
- 3: vehicle
- 4: blockchain system
- 41: node device
- 5: terminal device

## Claims

1. A test object testing system, **characterized by** comprising:
a measuring device; and
an information processing device,
wherein the measuring device acquires a measurement result necessary for determining a condition of a test object in accordance with predetermined rules, generates measurement data indicating the measurement result, and stores, in association with each other, protected device data including device data, which indicates a result of an inspection regarding whether or not the condition of the measuring device complies with the predetermined rules, and including a hash value of the device data and protected measurement data including the measurement data and a hash value of the measurement data.

2. The test object testing system according to claim 1, **characterized in that**
the information processing device generates result data including a result of determining the condition of the test object using the protected device data and the protected measurement data, and stores the result data in a blockchain.

3. The test object testing system according to claim 2, **characterized in that**
the information processing device determines whether or not the protected device data and the protected measurement data have been altered based on hash values included in the protected device data and the protected measurement data before determining the condition of the test object.

4. The test object testing system according to claim 2 or 3, **characterized in that**
the information processing device stores the result data in the blockchain in association with the protected device data and the protected measurement data used to determine the condition of the test object.

5. The test object testing system according to any one of claims 2 to 4, **characterized in that**
the information processing device determines whether or not the result data stored in the blockchain has been altered using a hash value stored in the blockchain.

6. The test object testing system according to any one of claims 2 to 5, **characterized in that**
the information processing device issues an NFT (Non-Fungible Token) associated with the result data.

7. The test object testing system according to any one of claims 1 to 6, **characterized in that**
the device data indicates a result of an inspection regarding whether or not settings for measurement in the measuring device satisfy predetermined conditions and a result of an inspection regarding whether or not measurement performance of the measuring device satisfies predetermined standards.

8. A test object testing system, **characterized by** comprising:
a measuring device; and
an information processing device,
wherein the measuring device stores device data indicating a result of an inspection regarding whether or not the measuring device complies with predetermined rules, generates measurement data indicating the measurement result of the measuring device, and transmits the device data and the measurement data to the information processing device, and
the information processing device receives the device data and the measurement data, generates protected device data including the device data and a hash value of the device data, generates protected measurement data including the measurement data and a hash value of the measurement data, and stores the protected device data and the protected measurement data in association with each other.

9. An information processing method, **characterized by** comprising:
acquiring device data indicating a result of an inspection regarding whether or not a condition of a measuring device for acquiring a measurement result necessary for determining a condition of a test object complies with predetermined rules;
acquiring measurement data indicating the measurement result of the measuring device; and
storing protected device data including the device data and a hash value of the device data in association with protected measurement data including the measurement data and a hash value of the measurement data.

10. A computer program, **characterized by** causing a computer to execute processing of:
acquiring device data indicating a result of an inspection regarding whether or not a condition of a measuring device for acquiring a measurement result necessary for determining a condition of a test object complies with predetermined rules;
generating protected device data including the device data and a hash value of the device data;
acquiring measurement data indicating the measurement result of the measuring device;
generating protected measurement data including the measurement data and a hash value of the measurement data; and
storing the protected device data and the protected measurement data in association with each other.
